# EUROPÄISCHE PATENTSCHRIFT

(11) **EP 1 893 708 B1**
(45) Veröffentlichungstag und Bekanntmachung des Hinweises auf die Patenterteilung: **25.01.2012**
(21) Anmeldenummer: 06761933.8
(22) Anmeldetag: 24.05.2006
(51) Int. Cl.: C09J 7/00, C09J 7/02, C09J 109/02, C09J 113/00, C09J 115/00, C08L 9/02

(54) **HITZE-AKTIVIERBARE FOLIEN ZUR FIXIERUNG VON METALLTEILEN AUF KUNSTSTOFFEN**
HEAT-ACTIVATED FILMS FOR FIXING METAL PARTS TO PLASTICS
PELLICULES THERMOACTIVABLES DESTINEES A FIXER DES PARTIES METALLIQUES SUR DES PLASTIQUES

(30) Priorität: 06.06.2005 DE 102005026191
(43) Veröffentlichungstag der Anmeldung: 05.03.2008
(73) Patentinhaber: TESA SE, 20253 Hamburg (DE)
(72) Erfinder: HUSEMANN, Marc, 22559 Hamburg (DE); HANNEMANN, Frank, 22047 Hamburg (DE); KOOP, Matthias, 22848 Norderstedt (DE)
(86) Internationale Anmeldenummer: PCT/EP2006/004972
(87) Internationale Veröffentlichungsnummer: WO 2006/131214

(56) Entgegenhaltungen:
- EP-A2- 0 284 564
- WO-A2-01/94493
- DE-A1- 2 118 333
- US-A- 4 725 637

## Beschreibung

Die Erfindung betrifft eine Mischung aus zumindest einem Nitrilkautschuk (S1) und zumindest einem Nitritbutadienkautschuk (S2) und zumindest einem Reaktivharz gemäβ Anspruch 1 insbesondere für eine Klebstoffolie zur Verklebung von Metallteilen auf Kunststoffen in portablen Consumerelektronik-Artikeln. Die Mischung weist nach der Verklebung auch bei tiefen Temperaturen unterhalb von - 15 °C eine hohe Verklebungsfestigkeit und Schockresistenz auf.

Zur Verklebung von Metallteilen auf Kunststoffen werden üblicher Weise doppelseitige Haftklebebänder eingesetzt. Die hierfür erforderlichen Klebkräfte genügen einer Fixierung und Befestigung der Metallbauteile auf den Kunststoffen. Als Metalle werden bevorzugt Stahl, Edelstahl sowie Aluminium eingesetzt. Als Kunststoffe werden z.B. PVC, ABS, PC oder Blends basierend auf diesen Kunststoffen eingesetzt. Für portable Konsumgüterelektronikartikel steigen jedoch stetig die Anforderungen. Zum einen werden diese Artikel immer kleiner, so dass damit auch die Verklebungsflächen geringer werden. Zum anderen muss die Verklebung zusätzliche Anforderungen erfüllen, da portable Artikel in einem größeren Temperaturbereich eingesetzt werden und zudem mechanischer Belastung (Stöße, Stürze usw.) ausgesetzt werden können. Diese Vorraussetzungen sind besonders problematisch für Metallverklebungen auf Kunststoffen. Der Kunststoff kann bei einem Sturz einen Teil der Energie absorbieren, während Metalle sich gar nicht verformen. In diesem Fall muss das Klebeband einen Großteil der Energie absorbieren. Dies kann in besonders effizienter Weise durch den Einsatz hitzeaktivierbarer Folien geschehen, die eine besonders hohe Klebkraft nach Aktivierung ausbilden können.

Hitze-aktivierbare Klebemassen können in zwei Kategorien unterschieden werden:
a) thermoplastische hitzeaktivierbare Folien
b) reaktive hitzeaktivierbare Folien

Thermoplastische hitzeaktivierbare Folien sind bereits seit langem bekannt und basieren z.B. auf Polyestern oder Copolyamiden. Kommerzielle Beispiele hierfür sind von den Firmen 3M (Produkte 615, 615S) oder tesa (Produkt 8440) erhältlich. Für die Anwendung in portablen Konsumgüterelektronikartikeln weisen diese thermoplastischen hitzeaktivierbaren Folien aber auch Nachteile auf. Dies betrifft insbesondere das "Oozing-Verhalten" unter Anwendung von Druck unter Temperatur, da in der Anwendung hauptsächlich Stanzlinge verarbeitet werden, die dann Ihre Form verändern.

Weiterhin lassen sich auch reaktive hitzeaktivierbare Folien einsetzen. Diese besitzen eine bedeutend bessere Dimensionsstabilität, wenn die elastomere Komponente eine hohe Elastizität aufweist. Weiterhin bedingen die Reaktivharze, dass eine Vernetzungsreaktion eintreten kann, die die Verklebungsfestigkeit deutlich erhöht. So lassen sich für diese Verklebung z.B. hitzeaktivierbare Folien auf Basis von Nitrilkautschuken und Phenolharzen einsetzen, wie z.B. kommerziell erhältlich durch das Produkt 8401 der Firma tesa. Ein Nachteil dieser reaktiven hitzeaktivierbaren Folien ist aber die Abhängigkeit der Verklebungsfestigkeit von den Aushärtungsbedingungen. Hier werden besonders hohe Anforderungen gestellt, da Konsumgüterelektronikgeräte in riesigen Stückzahlen hergestellt werden und somit die einzelnen Bauteile in sehr kurzen Taktzeiten produziert werden.

Der Nitrilkautschuk gibt der hitzeaktivierbaren Folie durch seine hohe Fließviskosität eine hohe Dimensionsstabilität und ermöglicht durch die Vernetzungsreaktion hohe Klebkräfte auf Metallen und Kunststoffen. Die hohe Dimensionsstabiliät und das geringe Fließvermögen besitzen aber auch Nachteile: Durch die hohe Festigkeit verhärtet sich die hitze-aktivierbare Folie bei tiefen Temperaturen sehr schnell und wird spröde, mit dem Resultat, dass die Verklebung bei sehr tiefen Temperaturen schockempfindlich wird und aufspringt.

Die EP 284 564 A beschreibt einen Klebefilm mit einer klebrigen härtbaren Außenschicht A und einer trockenen härtbaren Außenschicht B, die epoxidhaltige Addukte aromatischer Di- oder Polyglycidylether mit carboxylterminierten Butadien-Acrylonitrilkautschuken und/oder mit carboxylterminierten Polyestern umfasst.

In der WO 01/94493 A wird eine verstärkend wirkende Klebeschicht mit verbesserten Klebeeigenschfaten auf kalten und/oder öligen Untergründen beschrieben, in der die Klebeschicht ein epoxy-terminiertes Addukt eines Epoxyharzes und eines Nitrilkautschuks darstellt.

Die Schrift DE 21 18 333 A betrifft ein Mischpolymer auf Acrylnitril-Butadien-Basis, das Epoxyreste enthält und sich zur Zähmachung von Epoxyharzen eignet.

Epoxidharze reagieren mit den genannten Kautschuken der vorgenannten drei Schriften im Rahmen von Additionsreaktionen, kondensierend reagierende Reaktivharze sind nicht genannt.

Bisher ist es noch nicht gelungen, eine hitzeaktivierbare Folie in der Form herzustellen, dass die Verklebungsfestigkeit sowohl bei hohen als auch bei geringen Temperaturen sehr hoch ist und somit ein weiter Temperaturbereich abgedeckt werden kann.

Der Erfindung liegt in Anbetracht dieses Standes der Technik die Aufgabe zu Grunde, eine hitzeaktivierbare Klebstofffolie zum Befestigen von Metallteilen auf Kunststoffen für portable Konsumgüterelektronikartikel zur Verfügung zu stellen, welche in einem breiten Temperatur einsatzbereit ist.

Vorteilhaft sollte die Folie bei -20 °C einem Kälteschocktest standhalten und eine hohe Bindungsstärke in einem Temperaturbereich von -20°C und +50°C aufweisen.

Erfindungsgemäß wird die Aufgabe gelöst durch eine Klebstofffolie, aufweisend zumindest eine hitzeaktivierbare Klebmasse auf Basis einer Mischung aus zumindest einem Nitrilkautschuk S1 und zumindest einem Carboxy-, Amin- oder Epoxy-terminierten Nitrilbutadienkautschuk S2 mit einem Molekulargewicht von M_{w} kleiner oder gleich 20.000 g/mol und zumindest einem Reaktivharz, welches aus der Gruppe umfassend Phenolharze, Phenolresolharze in Kombination mit anderen Phenolharzen, Terpenphenolharze, Melaminharze und Novolakharze gewählt ist und welches somit zur Vernetzung mit sich selbst, mit anderen Reaktivharzen und/oder mit S1 und/oder S2 befähigt ist.

Bei der erfindungsgemäßen Mischung aus Nitrilkautschuk S1 und funktionalisiertem terminierten Nitrilbutadienkautschuk S2 und zumindest einem Reaktivharz handelt es sich um eine solche Mischung, die eine, bevorzugt mehrere oder sehr bevorzugt alle der folgenden Eigenschaften aufweist:
a) mindestens eine Glasübergangstemperatur ist größer als 10 °C und mindestens eine Glasübergangstemperatur kleiner als -20°C,
b) eine nach Testmethode A gemessene Fallhöhe von größer 1m bei Raumtemperatur (RT) und von größer 25 cm bei einer Temperatur von -20 °C,
c) eine nach Testmethode B Verklebungsfestigkeit von größer 3 N/mm² bei Raumtemperatur (RT) und von größer 6 N/mm² bei einer Temperatur von -20 °C.

Sehr vorteilhaft liegt die Mischung mikrophasensepariert vor (als Blend), gekennzeichnet durch mindestens zwei unterschiedliche Glasübergangstemperaturen im DSC (Differential oder Dynamic Scanning Calometer),

Durch die erfindungsgemäßen Mischung wird eine Verbesserung der klebtechnischen Eigenschaften der Klebstofffolie erreicht.

In einer vorteilhaften Ausführungsform der erfindungsgemäßen Mischung kann eine Verbesserung der klebtechnischen Eigenschaften insbesondere durch die Mikrophasenseparierung und durch die Ausbildung von zwei Glasübergangstemperaturen bei sehr tiefen Temperaturen (kleiner -20 °C) und bei hohen Temperaturen (> 10 °C) (Kombination der klebtechnischen Eigenschaften bei tiefen und bei hohen Temperaturen) erreicht werden.

Durch chemische Kopplung von thermodynamisch unverträglichen Polymerkettenbereichen weisen entsprechende Polymere eine Mikrophasenseparierung auf, d. h. thermodynamisch verträgliche Bereiche assoziieren, während thermodynamisch unverträgliche in räumlich separate Domänen segregieren, ohne dass jedoch eine makroskopische Phasentrennung auftritt. Es resultieren je nach Zusammensetzung Phasen unterschiedlicher Struktur ("Domänenbildung"). Für die Erfindung ist es nicht erforderlich, dass die entsprechend zu beobachtende oder zu vermessende Mikrophasenseparation "ideale" oder "unvollständige" Strukturen ergibt.

Typische Verfahren zur Ermittlung einer vorliegende Mikrophasenseparation beinhalten beispielsweise
• die Transmissionselektronenmikroskopie (TEM) bei Materialien, die unterschiedliche Wechselwirkung mit Staining-Agentien aufweisen;
• die Atomkraftmikroskopie (AFM) über die Oberflächentopologie, einen Härte- oder Adhäsionskontrast;
• Streumethoden (Neutronenstreuung, Röntgenkleinwinkelstreuung) bei Materialien mit Phasen, die einen Unterschied im Material/Strahlungs-Wirkungsquerschnitt zeigen;
   kalorimetrische Verfahren, wie die Differentialthermocalorimetrie (DSC) oder die Differentialthermoanalyse (DTA) und auch rheologische Messungen für Materialien mit Phasen unterschiedlicher Erweichungspunkte;
• NMR Spindiffusion für Materialien mit Phasen unterschiedlicher Dynamik.

Für den Fall der Mikrophasenseparierung wird durch die Domäne mit der geringen Glasübergangstemperatur die Kaltschlagfestigkeit und die Adhäsion bei geringen Temperaturen erhöht, durch die Domäne bei hohen Temperaturen wird die Verklebungsfestigkeit bei hohen Temperaturen und die Dimensionsstabilität der Stanzlinge unter Druck und unter Temperatur erhalten.

Die hier angegebenen Glasübergangstemperaturen entsprechen solchen, die aus quasistationären Experimenten, wie z.B. DSC (Differential oder Dynamic Scanning Calometrie), erhalten werden.

Der Gewichtsanteil der Nitrilkautschuke S1 und S2 beträgt bevorzugt zwischen 25 und 70 Gew.-%, besonders bevorzugt zwischen 30 und 60 % an der Gesamtzusammensetzung der reaktiven hitzaktivierbaren Folie.

Für die Verklebung der Metallteile auf den Kunststoffen werden je nach Oberflächenrauhigkeit, Wölbung oder Größe hitzeaktivierbare Folien mit einer Schichtdicke zwischen 25 und 300 µm, in einer besonders bevorzugten Auslegung mit einer Schichtdicke von 50 bis 250 µm eingesetzt.

Der erfinderische hitzeaktivierbare Kleber basiert auf einer Mischung aus Nitrilkautschuk S1 und einem Carboxy-, Amin- oder Epoxy-terminierten Nitrilbutadienkautschuk S2 mit einem Molekulargewicht von M_{w} < 20.000 g/mol.

Nitrilbutadienkautschuke sind unter Europrene™ von Eni Chem, oder unter Krynac™ und Perbunan™ von Bayer, oder unter Breon™ und Nipol N™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert.

Die Nitrilkautschuke S1 weisen in einer bevorzugen Auslegung der Erfindung einen Acrylnitrilanteil von 15 bis 45 % auf. Um eine vollständige Phasenseparierung mit den

Reaktivharzen zu vermeiden, sollte der Acrylnitrifanteil bei größer 15 % wiederum bezogen auf den Gesamtanteil von S1 liegen.

Ein weiteres Kriterium für den Nitrilkautschuk S1 ist die Mooney-Viskosität. Da eine hohe Flexibilität bei tiefen Temperaturen gewährleistet werden muss, sollte die Mooney-Viskosität bevorzugt unterhalb 100 liegen (Mooney ML 1+4 bei 100 °C). Kommerzielle Beispiele für solche Nitrilkautschuke sind z.B. Nipol™ N917 der Firma Zeon Chemicals.

Die Carboxyl-, Amin- oder Epoxy-terminierten Nitrilbutadienkautschuke S2 mit einem Molekulargewicht von M_{w} ≤ 20.000 g/mol weisen bevorzugt einen Acrylnitrilanteil von 5 % bis 30 % auf. Um eine optimale Mischbarkeit zu erzielen, sollte der Acrylnitrilanteil bevorzugt zumindest bei größer 5 %, wiederum bezogen auf den Gesamtanteil von S2, liegen. Um eine Mikrophasenseparierung zu erreichen, sollte bevorzugt die statische Glasübergangstemperatur im DSC bei kleiner -30 °C, mehr bevorzugt bei kleiner -35 °C liegen. Da eine hohe Flexibilität bei tiefen Temperaturen gewährleistet werden muss, sollte die Viskosität bei 27 °C bei kleiner 3.000.000 mPas, sehr bevorzugt bei kleiner 1.000.000 mPas liegen (Gerät Brookfield DV II, Spindel 21, Drehzahl 6 min⁻¹, ansonsten gemäß DIN 53018).

Kommerzielle Beispiele für solche Nitrilkautschuke S2 sind z.B. Hycar™ der Firma Noveon.

Für Carboxy-terminierte Nitrilbutadienkautschuke werden bevorzugt Kautschuke eingesetzt mit einer Carbonsäurezahl von 15 bis 45, sehr bevorzugt von 20 bis 40. Die Carbonsäurezahl wird als Wert in Milligramm KOH angegeben, der benötigt wird, um die Carbonsäure komplett zu neutralisieren.

Für Amin-terminierte Nitrilbutadienkautschuke werden besonders bevorzugt Kautschuke mit einem Amin-Wert von 25 bis 150, mehr bevorzugt von 30 bis 125 eingesetzt. Der Amin-Wert bezieht sich auf die Amin-Äquivalente, die durch Titration gegen HCl in ethanolischer Lösung bestimmt werden. Der Amin-Wert wird dabei auf Amin-Äquivalente pro 100 Gramm Kautschuk bezogen, aber letztendlich durch 100 geteilt.

In sehr bevorzugter Weise werden die Nitrilkautschuke S1 und S2 derart eingesetzt, dass das Gewichtsverhältnis zwischen 30 % Nitrilkautschuk S1 zu 70 % Nitrilkautschuk S2 und 95 % Nitrilkautschuk S1 zu 5 % Nitrilkautschuk S2 liegt. Mehr bevorzugt liegt das Gewichtsverhältnis des Nitrilkautschuks S1 zum Nitrilkautschuk S2 zwischen 40 zu 60 und 70 zu 30. Als besonders vorteilhaft hat es sich herausgestellt, ein ausgeglichenes Gewichtsverhältnis, also im Wesentlichen 50 zu 50, zu wählen.

Der Anteil der Reaktivharze im Hitze-aktivierbaren Kleber beträgt zwischen 75 und 30 Gew.-%.

Als Novolak-Harze können z.B. eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNippon Ink Chemistry oder Epikote™ 152 von Shell Chemical.

Weiterhin lassen sich als Reaktivharze auch Melamin-Harze einsetzen, wie z.B. Cymel™ 327 und 323 von Cytec,

Weiterhin lassen sich als Reaktivharze auch Terpenphenolharze, wie z.B. NIREZ™ 2019 von Arizona Chemical einsetzen.

Weiterhin lassen sich in einer weiteren bevorzugten Vorgehensweise als Reaktivharze auch Phenolharze, wie z.B. YP 50 von Toto Kasei, PKHC von Union Carbide Corp. und BKR 2620 von Showa Union Gosei Corp. einsetzen. Weiterhin lassen sich als Reaktiveharze auch Phenolresolharze auch in Kombination mit anderen Phenolharzen einsetzen.

Weiterhin lassen sich als Reaktivharze auch Polyisocyanate, wie z.B. Coronate™ L von Nippon Polyurethane Ind., Desmodur™ N3300 oder Mondur™ 489 von Bayer einsetzen.

In einer vorteilhaften Ausführung.der erfindungsgemäßen Klebstofffolie sind dem Blend außerdem klebkraftsteigernde (klebrigmachende) Harze zugesetzt; sehr vorteilhaft zu einem Anteil von bis zu 30 Gew.-%, bezogen auf die Gesamtmischung des hitzeaktivierbaren Klebers, Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenotharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit den Kautschuken S1 und/oder S2 kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Um die Reaktion zwischen den beiden Komponenten zu beschleunigen, lassen sich auch optional Vernetzer und Beschleuniger in die Mischung zu additivieren:
Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze.
Weiterhin lassen sich auch Amine, insbesondere tert.-Amine zur Beschleunigung einsetzen.

Neben Reaktivharzen lassen sich auch Weichmacher einsetzen. Hier können in einer bevorzugten Ausführung der Erfindung Weichmacher auf Basis Polyglykolethern, Polyethylenoxiden, Phosphatestern, aliphatische Carbonsäureester und Benzoesäureester eingesetzt werden. Weiterhin lassen sich auch aromatische Carbonsäureester, höhermolekulare Diole, Sulfonamide und Adipinsäureester einsetzen.

Weiterhin können optional Füllstoffe (z.B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und Thermoplaste, Compoundierungsmittel und/oder Alterungsschutzmittel, z.B. in Form von primären und sekundären Antioxidantien oder in Form von Lichtschutzmitteln zugesetzt sein.

In einer weiteren bevorzugten Ausführungsform werden dem Blend weitere Additive hinzugesetzt, wie z.B. Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke, Styrol-Butadien Kautschuke.

Polyvinylbutyrale sind unter Butvar™ von Solutia, unter Pioloform™ von Wacker und unter Mowital™ von Kuraray erhältlich. Polyacrylat Kautschuke sind unter Nipol AR™ von Zeon erhältlich. Chloropren Kautschuke sind unter Baypren™ von Bayer erhältlich. Ethylen-Propylen-Dien Kautschuke sind unter Keltan™ von DSM, unter Vistalon™ von Exxon Mobil und unter Buna EP™ von Bayer erhältlich. Methyl-Vinyl-Silikon Kautschuke sind unter Silastic™ von Dow Corning und unter Silopren™ von GE Silicones erhältlich. Fluorsilikon Kautschuke sind unter Silastic™ von GE Silicones erhältlich. Butyl Kautschuke sind unter Esso Butyl™ von Exxon Mobil erhältlich. Styrol-Butadien Kautschuke sind unter Buna S™ von Bayer, und Europrene™ von Eni Chem und unter Polysar S™ von Bayer erhältlich.

Polyvinylformale sind unter Formvar™ von Ladd Research erhältlich.

In einer weiteren bevorzugten Ausführungsform werden dem Blend weitere Additive hinzugesetzt, wie z.B. thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie z. B. Polytetrafluorethylen, Polyamide, Ethylenvinylacetate, Polyvinylacetate, Polyimide, Polyether, Copolyamide, Copolyester, Polyolefine, wie z.B. Polyethylen, Polypropylen, Polybuten, Polyisobuten, und Poly(meth)acrylate.

Die Klebkraft der Hitzaktivierbaren Folie kann durch weitere gezielte Additivierung gesteigert werden. So lassen sich z.B. Polyimin- oder Polyvinylacetat-Copolymere auch als klebkraftfördernde Zusätze verwenden.

### Verfahren zur Herstellung

Die erfindungsgemäßen Mischungen werden bevorzugt als hitzeaktivierbare Klebmassen verwendet. Die hitzeaktivierbaren Klebmassen können aus Lösung oder in der Schmelze hergestellt werden. Für die Herstellung in Lösung werden bevorzugt Lösemittel eingesetzt, in denen mindestens einer der Komponenten eine gute Löslichkeit aufweist. Zur Herstellung der Mischung werden die bekannten Rühraggregate, wie z.B. Kneter, eingesetzt. Hierfür kann auch der Eintrag von Wärme erforderlich sein. Anschließend werden die hitzeaktivierbaren Klebstoffe aus Lösung oder aus der Schmelze insbesondere auf einen temporären Träger beschichtet. Nach der Beschichtung aus Lösung wird in einem Trockenkanal das Lösungsmittel entfernt. Für die Beschichtung aus der Schmelze wird dem Blend zuvor das Lösungsmittel entzogen. In einer bevorzugten Ausführung wird das Lösemittel in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.

In einer weiteren Ausführung der Erfindung wird die hitzeaktivierbare Klebmasse in der Schmelze hergestellt. Für die Vermischung der Harze kann ein Kneter oder ein Doppelschneckenextruder, oder ein Planetwalzenextruder eingesetzt werden.

Die Beschichtung erfolgt dann wiederum aus der Schmelze, wiederum bevorzugt auf einen temporären Träger. Es wird über eine Schmelzdüse oder eine Extrusionsdüse beschichtet, wobei gegebenenfalls der Klebefilm gereckt wird, um die optimale Beschichtungsdicke zu erreichen.

Als Trägermaterialien werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. Die Trägermaterialien sollten mit einer Trennschicht ausgerüstet sein. Die Trennschicht besteht in einer sehr bevorzugten Auslegung der Erfindung aus einem Silikontrennlack oder einem fluorierten Trennlack. In einer bevorzugten Auslegung wird die hitzaktivierbare Klebemasse direkt auf ein Trennpapier beschichtet und dann weiter als Transfer-Tape eingesetzt. Zur Herstellung größerer Schichtdicken kann es auch von Vorteil sein, mehrere Klebemassenschichten zusammenzulaminieren. Dies findet besonders bevorzugt unter Einbringung von Wärme und Druck statt.

### Beispiele

### Testmethoden:

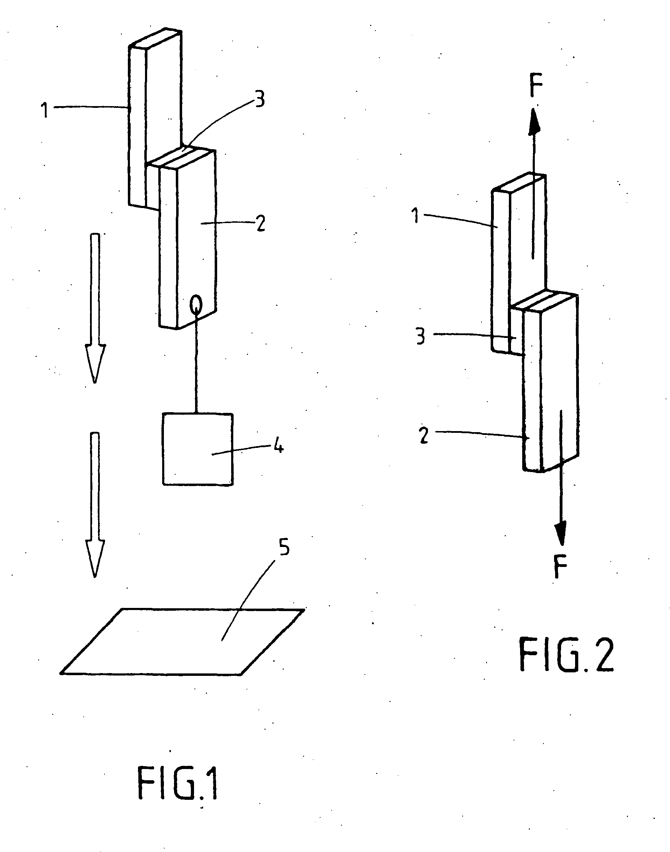

### Falltest A) (siehe hierzu Fig. 1)

Die Verklebungsfläche beträgt 2 cm². Es wird eine 1,5 mm dicke Aluminium-Platte (1) mit einer Breite von 2 cm mit einer Polycarbonat(PC)-Platte (2) mit einer Breite von 2 cm und einer Schichtdicke von 3 mm unter Verwendung einer erfindungsgemäßen hitzeaktivierbaren Klebstofffolie (3) verbunden.

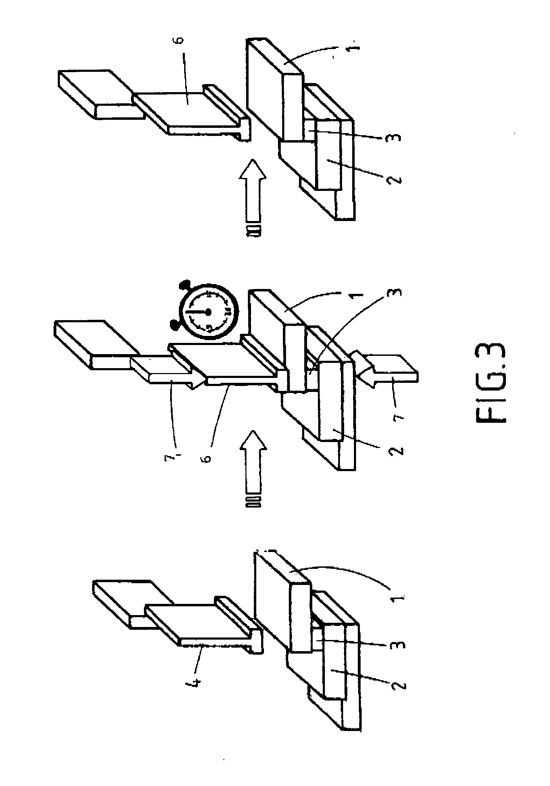

In einem ersten Schritt wird eine 200 µm dicke hitzeaktivierbare Folie auf das Aluminium mit Hilfe einer 95 °C heißen Heizplatte laminiert. Anschließend wird die Trennfolie abgezogen Die Verklebung der Prüfkörper wird in einer Heizpresse durchgeführt (vgl. Fig. 3), wobei über die Al-Seite erhitzt wird. Die Hitzeaktivierung wird mit einem 180 °C heißen Heizpressstempel (6) bei einem Druck (7) on 5 bar und 5 s Verpressdauer durchgeführt. Anschließend wird der Falltest durchgeführt (Pfeile in der Figur: Fallrichtung). An der PC-Platte wird ein 50 g schweres Gewicht (4) befestigt. Dann wird der gesamte Verbund aus unterschiedlichen Höhen auf eine Stahlplatte (5) fallen gelassen. Es wird die Höhe bestimmt, bei der die Verklebung mit der hitzeaktivierbaren Folie noch den Stoß auffangen kann und die AI/PC Prüfkörper nicht auseinander fallen. Der Test wird weiterhin auch bei unterschiedlichen Temperaturen durchgeführt.

### Verklebungsfestigkeit B)

Die Verklebungsfestigkeit wird mit einem Dynamischen Schertest bestimmt. Die Verklebungsfläche beträgt 2 cm². Es wird eine 1.5 mm dicke Al-Platte (1) mit einer Breite von 2 cm mit einer PC-Platte (2) mit einer Breite von 2 cm und einer Schichtdicke von 3 mm mittels einer erfindungsgemäßen hitzeaktivierbaren Klebstofffolie (3) verbunden.

In einem ersten Schritt wird eine 200 µm dicke hitzeaktivierbare Folie auf das Aluminium mit Hilfe einer 95 °C heißen Heizplatte laminiert. Anschließend wird die Trennfolie abgezogen. Die Verklebung der Prüfkörper wird in einer Heizpresse durchgeführt (vgl. Fig. 3), wobei über die Al-Seite erhitzt wird. Die Hitzeaktivierung wird mit einem 180 °C heißen Heizpressstempel (6) bei einem Druck (7) von 5 bar und 5 s Verpressdauer durchgeführt. Anschließend werden die Prüfmuster mit einer Zwickmaschine mit 10 mm/min unter Anwendung der langsam ansteigenden Kraft F auseinandergerissen. Die gemessene Einheit wird in N/mm² angegeben und ist die maximale Kraft, die gemessen wird, um die mit einem 180 °C heißen Heizpressstempel bei einem Druck von 5 bar und 5 s Verpressdauer durchgeführt.

Anschließend werden die Prüfmuster mit einer Zwickmaschine mit 10 mm/min unter Anwendung der langsam ansteigenden Kraft F auseinandergerissen. Die gemessene Einheit wird in N/mm² angegeben und ist die maximale Kraft, die gemessen wird, um die Prüfkörper (Aluminium und Polycarbonat) von einander zu trennen. Die Messung wird bei unterschiedlichen Temperaturen durchgeführt:
- 20 °C, 0 % Luftfeuchtigkeit
23 °C, 50 % Luftfeuchtigkeit
50 °C, 50 % Luftfeuchtigkeit

Die Messungen werden sofort nach der Verpressung und Hitzeaktivierung durchgeführt, wobei ca. 30 Minuten zur Akklimatisierung auf den jeweiligen Temperaturbereich gewartet wird.

### Handytest C)

Die hitzeaktivierbare Folie wird mit einer Schichtdicke von 200 µm zur Verklebung eines Aluminiumdekorstückes auf einem Polycarbonat-Handygehäuse eingesetzt. Die Verklebungsfläche beträgt ca. 4 cm². Zur Verklebung wird eine Heizpresse mit 180 °C, 5 bar und 5 sec. Härtungszeit eingesetzt. Nach 24 h werden die Handyschale nach der Verklebung auf - 20 °C herabgekühlt. Die Probenkörper werden dann gegenseitig bei dieser Temperatur verdreht (getwistet).

### Molekulargewichtsbestimmung

Die Bestimmung der mittleren Molekulargewichte M_{w} (Gewichtsmittel) erfolgte durch Gelpermeationschromatorgraphie entsprechend der folgenden Parameter:
Eluent: THF/0,1 Vol.-% Trifluoressigsäure
Vorsäule: PSS - SDV, 10 µ, ID 8,0 mm x 50 mm
Säule: PSS -SDV, 10 µ linear one, ID 8,0 mm x 300 mm
Pumpe TSP P 100
Fluß: 0,5 ml/min
Probenkonzentration: 1,5 g/l
Injektionssystem: TSP AS 3000 mit 100 µl Injektionsvolumen
Temperatur: 25 °C
Detektor: Shodex RI 71

Es wurde gegen Toluol als internen Standard gemessen.

Eine Kalibration erfolgte mit Polystyrol-Standards im Trennbereich der Säule; unter Nutzung der bekannten Mark Houwink Koeffizenten a und K wurde die Polystyrol-Kalibrierung universell in eine PMMA-Kalibrierung umgerechnet.

Die Berechnung der Molmassenmittelwerte und deren Verteilung erfolgte mittels der Streifenmethode (WinGPC Version 6.20) rechnergestützt basierend auf der universellen (PMMA-) Kalibrierung.

Bei allen Angaben handelt es sich um "PMMA-Molmassen-Äquivalente".

### Referenzbeispiel 1)

50 Gew.-% Breon N36 C80 (Nitrilkautschuk) der Fa. Zeon, 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Referenzbeispiel 2)

50 Gew.-% Nipol N1094-80 (Nitrilkautschuk) der Fa. Zeon, 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitze-aktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 3)

35 Gew.-% Nipol N1094-80 (Nitrilkautschuk) der Fa. Zeon, 15 Gew.-% CTBN 1300X13 CL (Carboxy-terminierter Nitrilbutadienkautschuk der F. Noveon, M_{w} = 3150 g/mol,

500.000 mPas bei 27 °C, Carbonsäurezahl 32, Acrylnitrilanteil 26 Gew.-%) 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitze-aktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 4)

30 Gew.-% Nipol N1094-80 (Nitrilkautschuk) der Fa. Zeon, 20 Gew.-% CTBN 1300X13 CL (Carboxy-terminierter Nitrilbutadienkautschuk der F. Noveon, M_{w} = 3150 g/mol, 500.000 mPas bei 27 °C, Carbonsäurezahl 32, Acrylilnitrilanteil 26 Gew.-%) 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitze-aktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 5)

35 Gew.-% Nipol N1094-80 (Nitrilkautschuk) der Fa. Zeon, 15 Gew.-% ATBN 1300X45 (Amin-terminierter Nitrilbutadienkautschuk der F. Noveon, M_{w} = 3750 g/mol, 375.000 mPas bei 27 °C, Aminzahl 30, Acrylnitrilanteil 18 Gew.-%), 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitze-aktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 6)

30 Gew.-% Nipol N1094-80 (Nitrilkautschuk) der Fa. Zeon, 20 Gew.-% ATBN 1300X45 (Amin-terminierter Nitrilbutadienkautschuk der F. Noveon, M_{w} = 3750 g/mol, 375.000 mPas bei 27 °C, Aminzahl 30, Acrylnitrilanteil 18 Gew.-%), 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Ergebnisse:

Die erfindungsgemäßen hitzeaktivierbaren Klebstofffolien 3 bis 6 wurden analog mit zwei Referenzbeispielen 1 und 2 ausgeprüft. Referenzbeispiel 1 stellt eine hitzeaktivierbare Folie dar, die auf einem hitzeaktivierbaren Standard-Klebstoff mit einem Nitrilkautschuk und einem Acrylnitrilanteil von 36 Gew.-% basiert. Das Referenzbeispiel 2 stellt eine hitzeaktivierbare Folie dar, die auf einem hitzeaktivierbaren Standard-Klebstoff mit einem Nitrilkautschuk und einem Acrylnitrilanteil von 23 Gew.-% basiert. Alle Beispiele wurden unter identischen Härtungsbedingungen zur Verklebung von Aluminium auf Polycarbonat (PC) eingesetzt - eine Anwendung, die z.B. bei der Herstellung von Handys häufig auftritt. Nach der Verklebung wurden die Muster einem Falltest unterzogen. Die Ergebnisse sind in Tabelle 1 dargestellt. Die jeweilige Fallhöhe wird in cm angegeben. Tabellen 1:

| Beispiele | Testmethode A bei RT | Testmethode A bei - 20 °C |
|---|---|---|
| Referenz 1 | > 150 cm | 8 cm |
| Referenz 2 | > 150 cm | 15 cm |
| 3 | > 150 cm | 70 cm |
| 4 | > 150 cm | 80 cm |
| 5 | > 150 cm | 60 cm |
| 6 | > 150 cm | 90 cm |

Tabelle 1 kann entnommen werden, dass die erfindungsgemäßen Beispiele 3 bis 6 bei - 20 °C eine deutlich bessere Kälteschockempfindlichkeit aufweisen, was sich wiederum in der höheren Fallhöhe widerspiegelt. Bei Raumtemperatur sind dagegen die Unterschiede sehr gering und alle Beispiele weisen eine hohe Resistenz gegen Schock auf.

Des Weiteren wurden die Verklebungsfestigkeiten für die Beispiele bei unterschiedlichen Temperaturen gemessen. Wiederum wurden die Verkleburigs-/Härtüngsbedingungen für alle Beispiele konstant gehalten. Die Ergebnisse sind in Tabelle 2 dargestellt. Tabelle 2

| Beispiele | Testmethode B bei RT | Testmethode B bei + 50 °C | Testmethode B bei - 20 °C |
|---|---|---|---|
| Referenz 1 | 4,3 N/mm² | 1,5 N/mm² | 4,8 N/mm² |
| Referenz 2 | 3,9 N/mm² | 1,0 N/mm² | 5,5 N/mm² |
| 3 | 4,2 N/mm² | 2,0 N/mm² | 10,1 N/mm² |
| 4 | 4,8 N/mm² | 2,3 N/mm² | 12,2 N/mm² |
| 5 | 4,0 N/mm² | 1,6 N/mm² | 9,8 N/mm² |
| 6 | 5,1 N/mm² | 2,1 N/mm² | 13,5 N/mm² |

Tabelle 2 kann entnommen werden, dass insbesondere bei tiefen Temperaturen die Verklebungsfestigkeit für die erfindungsgemäßen Beispiele 3 bis 6 am höchsten sind. Dies verdeutlicht, dass in Verbindung mit der hervorragenden Kälteschlagfestigkeit die erfindungsgemäßen Beispiele ein deutlich besseres Tieftemperaturverhalten aufweisen.

In einem letzten Versuch wurde eine praxisrelevante Verklebung einer Handyschale mit einem Aluminiumdekorstück durchgeführt. Bei einer Temperatur von - 20 °C wurde dann die Handyschale verdreht. Bei den Referenzbeispielen 1 und 2 öffnete sich sehr leicht die Verklebung. Die erfindungsgemäßen Beispiele 3 bis 6 konnten dagegen problemlos bei diesen tiefen Temperaturen verdreht werden und weisen somit in der Kälte ein deutlich besseres Klebeverhalten auf. Bei Raumtemperatur zeigten dagegen alle 6 Beispiele ein problemloses Verhalten und eine hohe Haftung.

## Patentansprüche

1. Klebstofffolie, aufweisend zumindest eine hitzeaktivierbare Klebmasse auf Basis einer Mischung aus zumindest einem Nitrilkautschuk S1 und zumindest einem Carboxy-, Amin- oder Epoxy-terminierten Nitrilbutadienkautschuk S2 mit einem gewichtsmittleren Molekulargewicht von M_{w} ≤ 20.000 g/mol (bezogen auf die Messmethode "Molekulargewichtsbestimmung" in der Beschreibung), sowie zumindest einem Reaktivharz, gewählt aus der Gruppe umfassend Phenolharze, Phenolresolharze in Kombination mit anderen Phenolharzen, Terpenphenolharzen, Melamin-Harze und Novolakharze.

2. Klebstofffolie nach Anspruch 1, **dadurch gekennzeichnet, dass** der Acrylnitrilanteil an dem zumindest einen Nitrilkautschuk S1 zwischen 15 und 45 Gew.-% liegt.

3. Klebstofffolie nach zumindest einem der vorangehenden Ansprüche, **dadurch gekennzeichnet, dass** der Acrylnitrilanteil an dem zumindest einen Carboxy-. Amin- oder Epoxy-terminiertem Nitrilbutadienkautschuk S2 zwischen 5 und 30 Gew.-% liegt.

4. Klebstofffolie nach zumindest einem der vorangehenden Ansprüche, **dadurch gekennzeichnet, dass** die Nitrilkautschuke S1 und S2 derart gewählt werden, dass das Gewichtsverhältnis des Nitrilkautschuk S1 zum Nitrilkautschuk S2 zwischen 30 zu 70 und 95 zu 5, bevorzugt zwischen 40 zu 60 und 70 zu 30, sehr bevorzugt etwa 50 zu 50 beträgt.

5. Klebstofffolie nach zumindest einem der vorangehenden Ansprüche, **dadurch gekennzeichnet, dass** das zumindest eine Reaktivharz zu einem Anteil zwischen 30 und 75 Gew.%, bezogen auf die hitzeaktivierbare Klebmasse, vorliegt.

6. Klebstofffolie nach zumindest einem der vorangehenden Ansprüche, **dadurch gekennzeichnet, dass** als Nitrilkautschuk S2 Carboxy-terminierte Nitrilbutadien kautschuke mit einer Carbonsäurezahl von 15 bis 45, bevorzugt von 20 bis 40 eingesetzt werden.

7. Klebstofffolie nach zumindest einem der Ansprüche 1 bis 5, **dadurch gekennzeichnet, dass** als Nitrilkautschuk S2 Amin-terminierte Nitrilbutadienkautschuke mit einem Aminwert von 25 bis 150, bevorzugt von 30 bis 125 eingesetzt werden.

8. Klebstofffolie nach zumindest einem der vorangehenden Ansprüche, **dadurch gekennzeichnet, dass** der Mischung klebkraftsteigernde Harze zugesetzt sind, insbesondere zu einem Anteil von bis 30 Gew.-%, bezogen auf die Mischung der Nitrilkautschuke S1 und S2.

9. Verwendung einer Klebstofffolie nach zumindest einem der Ansprüche 1 bis 8 zur Verklebung von Metallteilen in Elektronikartikeln.

## Claims

1. Adhesive sheet comprising at least one heat-activatable adhesive based on a mixture of at least one nitrile rubber S1 and at least one carboxy-, amine- or epoxy-terminated nitrile butadiene rubber S2 having a weight-average molecular weight of M_{w} ≤ 20 000 g/mol (based on the "Molecular weight determination" measurement method in the description), and at least one reactive resin, selected from the group consisting of phenolic resins, phenolic resole resins in combination with other phenolic resins, terpene-phenolic resins, melamine resins and novolak resins.

2. Adhesive sheet according to Claim 1, **characterized in that** the acrylonitrile fraction of said at least one nitrile rubber S1 is between 15% and 45% by weight.

3. Adhesive sheet according to at least one of the preceding claims, **characterized in that** the acrylonitrile fraction of said at least one carboxy-, amine- or epoxy-terminated nitrile butadiene rubber S2 is between 5% and 30% by weight.

4. Adhesive sheet according to at least one of the preceding claims, **characterized in that** nitrile rubbers S1 and S2 are selected such that the weight ratio of nitrile rubber S1 to nitrile rubber S2 is between 30 to 70 and 95 to 5, preferably between 40 to 60 and 70 to 30, very preferably about 50 to 50.

5. Adhesive sheet according to at least one of the preceding claims, **characterized in that** said at least one reactive resin is present in a fraction of between 30% and 75% by weight relative to the heat-activatable adhesive.

6. Adhesive sheet according to at least one of the preceding claims, **characterized in that** said nitrile rubber S2 comprises carboxy-terminated nitrile butadiene rubbers having a carboxylic acid number of 15 to 45, preferably of 20 to 40.

7. Adhesive sheet according to at least one of Claims 1 to 5, **characterized in that** said nitrile rubber S2 comprises amine-terminated nitrile butadiene rubbers having an amine value of 25 to 150, preferably of 30 to 125.

8. Adhesive sheet according to at least one of the preceding claims, **characterized in that** tackifying resins are added to the blend, in particular in a fraction of up to 30% by weight; relative to the mixture of nitrile rubbers S1 and S2.

9. Use of an adhesive sheet according to at least one of Claims 1 to 8 for bonding metal parts in electronics articles.

## Revendications

1. Film adhésif, comprenant au moins une composition adhésive thermo-activable à base d'un mélange d'au moins un caoutchouc de nitrile S1 et d'au moins un caoutchouc de nitrile-butadiène à terminaison carboxy, amine ou époxy S2 d'un poids moléculaire moyen en poids M_{w} ≤ 20 000 g/mol (relatif au procédé de mesure « détermination du poids moléculaire » dans la description), ainsi qu'au moins une résine réactive, choisie dans le groupe comprenant les résines de phénol, les résines de phénol-résol en combinaison avec d'autres résines de phénol, les résines de terpène-phénol, les résines de mélamine et les résines de novolaque.

2. Film adhésif selon la revendication 1, **caractérisé en ce que** la proportion d'acrylonitrile dans le ou les caoutchoucs de nitrile S1 est comprise entre 15 et 45 % en poids.

3. Film adhésif selon au moins l'une quelconque des revendications précédentes, **caractérisé en ce que** la proportion d'acrylonitrile dans le ou les caoutchoucs de nitrile-butadiène à terminaison carboxy, amine ou époxy S2 est comprise entre 5 et 30 % en poids.

4. Film adhésif selon au moins l'une quelconque des revendications précédentes, **caractérisé en ce que** les caoutchoucs de nitrile S1 et S2 sont choisis de manière à ce que le rapport en poids entre le caoutchouc de nitrile S1 et le caoutchouc de nitrile S2 soit compris entre 30 sur 70 et 95 sur 5, de préférence entre 40 sur 60 et 70 sur 30, de marnière très préférée soit d'environ 50 sur 50.

5. Film adhésif selon au moins l'une quelconque des revendications précédentes, **caractérisé en ce que** la ou les résines réactives sont présentes en une proportion comprise entre 30 et 75 % en poids, par rapport à la composition adhésive thermo-activable.

6. Film adhésif selon au moins l'une quelconque des revendications précédentes, **caractérisé en ce que** des caoutchoucs de nitrile-butadiéne à terminaison carboxy ayant un indice d'acide de 15 à 45, de préférence de 20 à 40, sont utilisés en tant que caoutchouc de nitrile S2.

7. Film adhésif selon au moins l'une quelconque des revendications 1 à 5, **caractérisé en ce que** des caoutchoucs de nitrile-butadiène à terminaison amine ayant un indice d'amine de 25 à 150, de préférence de 30 à 125, sont utilisés en tant que caoutchouc de nitrile S2.

8. Film adhésif selon au moins l'une quelconque des revendications précédentes, **caractérisé en ce que** des résines augmentant l'adhérence sont ajoutées au mélange, notamment en une proportion de jusqu'à 30 % en poids, par rapport au mélange des caoutchoucs de nitrile S1 et S2.

9. Utilisation d'un film adhésif selon au moins l'une quelconque des revendications 1 à 8 pour le collage de parties métalliques dans des articles électroniques.
